# EUROPEAN PATENT SPECIFICATION

(11) **EP 4 550 858 B1**
(45) Date of publication and mention of the grant of the patent: **11.02.2026**
(21) Application number: 24198442.6
(22) Date of filing: 04.09.2024
(51) Int. Cl.: H04W 4/40, G06F 9/46

(54) **SOFTWARE DESIGN METHOD FOR INTELLIGENT VEHICLE-MOUNTED TERMINAL BASED ON MICROSERVICE ARCHITECTURE**
SOFTWAREENTWURFSVERFAHREN FÜR INTELLIGENTES FAHRZEUGMONTIERTES ENDGERÄT AUF BASIS EINER MIKRODIENSTARCHITEKTUR
PROCÉDÉ DE CONCEPTION DE LOGICIEL POUR TERMINAL EMBARQUÉ INTELLIGENT BASÉ SUR UNE ARCHITECTURE DE MICROSERVICE

(30) Priority: 02.11.2023 CN 202311449545
(43) Date of publication of application: 07.05.2025
(73) Proprietor: Xiamen King Long United Automotive Industry Co., Ltd., Xiamen City (CN)
(72) Inventor: Jiang, Jin, Xiamen City (CN); Lan, Huaisheng, Xiamen City (CN)
(74) Representative: Schwerbrock, Florian

(56) References cited:
- EP-A1- 3 099 019
- WO-A1-2022/192773
- US-A1- 2022 321 655

## Description

### BACKGROUND OF THE PRESENT INVENTION

### FIELD OF INVENTION

The present invention relates to the technical field of intelligent networked vehicle, more specifically refers to a software design method for intelligent vehicle-mounted terminal based on microservice architecture.

### DESCRIPTION OF RELATED ARTS

With the rapid development of the social economy and the acceleration of industrialization, problems such as traffic congestion, energy consumption, and environmental pollution caused by the automotive society are becoming increasingly serious. The "intelligent transportation system" with the goal of "ensuring safety, improving efficiency, improving the environment, and saving energy" has attracted widespread attention, and vehicle-mounted terminal is an important part of the intelligent transportation system. Under the inevitable trend of intelligent transportation in the future, from policy to market, the research and development of vehicle-mounted terminal is particularly necessary.

In recent years, with the technological change, the development of 5G, communication protocols, roadside sensors and vehicle-mounted terminal has accelerated, empowering intelligent transportation. The deployment of vehicle-mounted terminal is a key link in the industrialization and application of intelligent transportation, and the functions are gradually improving. The intelligent vehicle-mounted terminal can obtain driving parameters such as the vehicle's speed and direction in real time, as well as road network information such as traffic lights ahead and road hazard conditions. Combined with intelligent platform, the real-time speed of vehicles can be planned in real time through the cloud control platform. In addition, it can also be combined with traffic light collaborative control to achieve accurate arrival of intelligent networked vehicles and improve the service quality of public transportation and private driving.

Currently, vehicle-mounted terminal on the market are still in their infancy and cannot meet the increasing demand for intelligent networked vehicle functions. There are common problems such as fixed scenes, single functions, delayed data collection and packet loss, poor scalability and poor anti-interference, etc., which face challenges in security and reliability.

Prior art document WO 2022/192773 A1 discloses a solution for vehicle electronics based on a microservices architecture implementing internal functionalities as sensoring, internal vehicle communications and data storage.

### SUMMARY OF THE PRESENT INVENTION

The purpose of the present invention is to provide a software design method for intelligent vehicle-mounted terminal based on microservice architecture, which applies the microservice architecture and realizes software system development based on the framework of distributed microservices. In terms of software architecture, the single application integrated by the original intelligent vehicle-mounted terminal is divided into a group of small services, and the services are coordinated and cooperated with each other to provide ultimate value for the application layer and the terminal.

The present invention adopts the following technical solutions:
A software design method for intelligent vehicle-mounted terminal based on microservice architecture, wherein dividing a system software into a hardware adaptation layer, a system component, a service layer, and an application layer, wherein
the hardware adaptation layer includes an embedded operating system related interface and a hardware external setting interface driver, wherein
the system component includes a GNSS positioning module, a C-V2X module, a 5G network module, a vehicle body data acquisition and control module, a security module, a system application program, a specific protocol module, and a data storage module, wherein communicating with each other through a lightweight message component between the modules, wherein
the service layer includes a system management service, a network management service, a V2X hazard detection algorithm service, an internet of vehicles service, and a firmware upgrade service, wherein communicating with each other through communication protocols between the services, wherein
the application layer includes several specific implementations of vehicle-road collaboration application scenarios and related HMI services, wherein
communicating and connecting the system management service and the GNSS positioning module, the C-V2X module, and the 5G network module respectively; communicating and connecting the internet of vehicles service and the vehicle body data acquisition and control module, the security module, the system application program, the specific protocol module and the data storage module respectively; communicating and connecting the network management service and the 5G network module and the security module respectively; enabling the system software to realize the Internet of Vehicles through the network management service through the 5G network module; and establishing communication between a system main controller and a vehicle CAN bus, transmitting a parsed vehicle data to the vehicle body data acquisition and control module through a network socket interface, and finally processing through the C-V2X module.

In a preferred embodiment, communicating the C-V2X module and the system main controller through a V2X protocol stack, wherein the V2X protocol stack includes an access layer, a network layer and a message layer protocol, wherein the access layer includes an Uu interface and a PC5 interface, wherein the network layer includes a data sublayer and a management sublayer, wherein the data sublayer not only transmits data flows between application layers, but also transmits data flows between management entities of different devices or between management entities and applications, wherein the management sublayer transmits management data flows between different devices by using the data sublayer service, wherein the message layer is located inside the application layer, connects downward to the data sublayer of the network layer, and supports specific user applications upward.

Specifically, implementing the system-related function interfaces for unified calling by an upper-layer application through the embedded operating system related interface, wherein the upper-layer application configures different relevant parameters when calling, wherein the embedded operating system related interface includes memory operation functions, system tasks, semaphores, thread synchronization mutexes, system message queues, events and timers.

Realizing the initialization of various external settings through the hardware external setting interface, and providing an open, send or write data, receive or read data, deinitialize or close the function interface, wherein the hardware external setting interface includes a serial port communication, a serial external setting SPI communication, a I2C bus, and a network socket interface.

Furthermore, providing a basic and high-precision differential positioning service for the vehicle through the GNSS positioning module, wherein the protocols involved include NMEA0183, Ntrip Client and RTCM protocol, wherein providing a basic positioning data through the GNSS positioning module, starting the GPSD daemon through the system management service to be responsible for communicating with the hardware positioning module, outputting the hardware positioning module positioning information using the NMEA0183 standard protocol, opening the system management service to configure the relevant parameters of the hardware positioning module through the UBX protocol, parsing out the basic positioning information, and then sending the positioning information into the C-V2X module to provide positioning service.

If the hardware positioning module supports a high-precision differential positioning, the system management service obtains a high-precision differential positioning base station information from the Qianxun server through the Ntrip protocol, and then sends the high-precision differential positioning base station information in the internal of a high-precision differential positioning module, which calculates and outputs a high-precision positioning information through internal algorithms.

Preferably, defining a dataset of the message layer using the ASN.1 standard, and formulating following the nested logic of "message frame - message body - data frame - data element", wherein the interactive encoding and decoding method of the dataset follows the non-aligned compression encoding rule UPER.

Preferably, the dataset of the message layer defined by the C-V2X module standard mainly consists of one message frame format, five most basic message bodies, and corresponding data frames and data elements. The five most basic message bodies are a vehicle basic safety message, a map message, a road safety information message (RSI), a roadside safety message, and a signal light message.

Inserting into a U disk, automatically mounting the U disk to a corresponding directory of MNT by the system, and detecting whether the specified application firmware is stored in the U disk; if yes, automatically copying to a specific directory by the system and comparing the MD5 value of the new firmware with the original firmware; if the comparison fails, copying will be attempted again; if the replication fails after repeated copies, failing the upgrade; if the replication is successful, replacing the old firmware with the new firmware and modifying the executable permissions, and taking effect after device restart.

Each service of the present invention runs in its independent process, and services communicate with each other using a lightweight communication mechanism. Each service is built around a specific business and can be independently deployed to a production environment, a production-like environment, etc.

The distributed scenario development method based on the microservice architecture enables different service modules to be freely combined to form application scenarios, which is convenient for independent deployment, distributed management and code decoupling, and the applications can be updated and expanded independently, reducing the coupling of hardware platforms and improving software portability.

From the above description of the present invention, it can be seen that, compared with the prior art, the present invention has the following advantages:
1. Simple development. The microservice architecture splits the complex system, so that the development of each microservice application becomes very simple, for developers, there is no need to analyze a lot of code, and the efficiency is greatly improved.
2. Quickly respond to changes in demand. Generally, changes in demand come from changes in local functions. Such changes will be implemented in each microservice. The functions of each microservice are relatively simple and easy to change. Therefore, microservices are suitable for agile development methods and can quickly respond to changes in demand.
3. The system is more stable and reliable. Microservices run in a distributed environment with supporting monitoring and scheduling mechanisms, and provide flexible and scalable management, fully ensuring the stability and reliability of the system operation.
4. Update anytime and anywhere. The deployment and update of a microservice will not affect the normal operation of the global system, and can be done without being noticed, and can be deployed and updated at any time.
5. The scale can be continuously expanded to meet the ever-changing needs of application scenarios in the field of intelligent transportation.

### BRIEF DESCRIPTION OF THE DRAWINGS

FIG. 1 is an architecture diagram of the intelligent vehicle-mounted terminal software of the present invention.
FIG. 2 is a work flow diagram of the intelligent vehicle-mounted terminal software of the present invention.
FIG. 3 is an implementation block diagram of the GNSS positioning module of the present invention.
FIG. 4 is a network topology diagram of the OBU system of the present invention.
FIG. 5 is a vehicle data processing flow diagram of the present invention.
FIG. 6 is a network layer framework of the V2X protocol stack of the present invention.
FIG. 7 is a message layer framework of the V2X protocol stack of the present invention.
FIG. 8 is a flow diagram of the U disk local upgrade of the present invention.

### DETAILED DESCRIPTION OF THE PREFERRED EMBODIMENT

The specific embodiments of the present invention will be described below with reference to the accompanying drawings. In order to fully understand the present invention, many details are described below, but it is apparent to those skilled in the art that the present invention can be implemented without these details. For well-known components, methods, and processes, detailed descriptions are not provided below.

This embodiment provides a software design method for intelligent vehicle-mounted terminal based on microservice architecture, which applies the microservice architecture and implements software system development based on a distributed microservice framework. In terms of software architecture, the single application integrated by the original intelligent vehicle-mounted terminal is divided into a group of small services, and the services are coordinated and cooperated with each other to provide ultimate value for the application layer and the terminal.

Each service runs in its own independent process, and services communicate with each other using a lightweight communication mechanism (RESTful API based on HTTP). Each service is built around a specific business and can be independently deployed to a production environment, a production-like environment, etc. In addition, unified and centralized service management mechanisms should be avoided as much as possible. For a specific service, it should be built using languages and tools including but not limited to C, C#, C++, Java, Matlab, Python, etc. according to the business context.

A software design method for intelligent vehicle-mounted terminal based on microservice architecture, as follows:

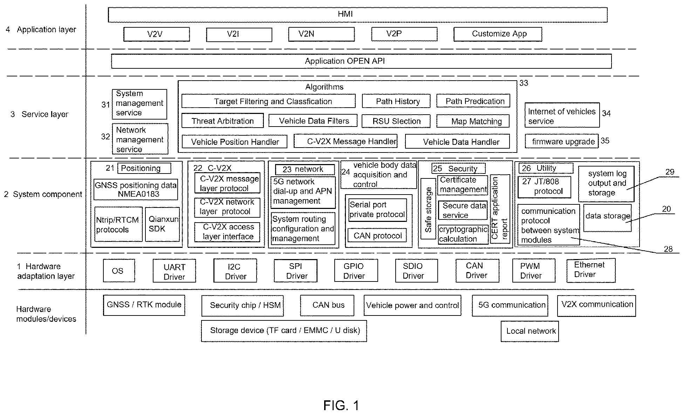

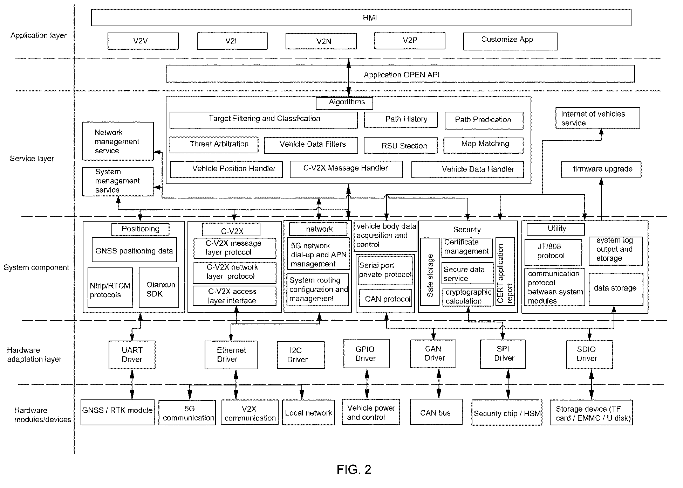

As shown in Figs. 1 and 2, dividing an intelligent vehicle-mounted terminal software into a hardware adaptation layer 1, a system component 2, a service layer 3, and an application layer 4.
I . The hardware adaptation layer 1 includes an embedded operating system related interface and a hardware external setting interface driver:
   1. The embedded operating system related interface includes memory operation functions, system tasks, semaphores, thread synchronization mutexes, system message queues, events and timers, etc. Implement system-related function interfaces for the upper-layer applications to call in a unified manner, and configure different related parameters when upper-layer applications call.
   2. The hardware external setting interface is used to implement the initialization of various external settings, and provides but is not limited to function interfaces such as opening, sending or writing data, receiving or reading data, and deinitializing or closing. The implemented external setting hardware interface include a serial port communication, a serial external setting SPI communication, a I2C bus, and a network socket interface.
II. The system component 2 includes a GNSS positioning module 21, a C-V2X module 22, a 5G network module 23, a vehicle body data acquisition and control module 24, a security module 25, a system application program 26, a specific protocol module 27, a communication protocol between system modules 28, a system log output and storage module 29, a data storage module 20, etc. The various modules communicate with each other through the communication protocol between system modules 28.

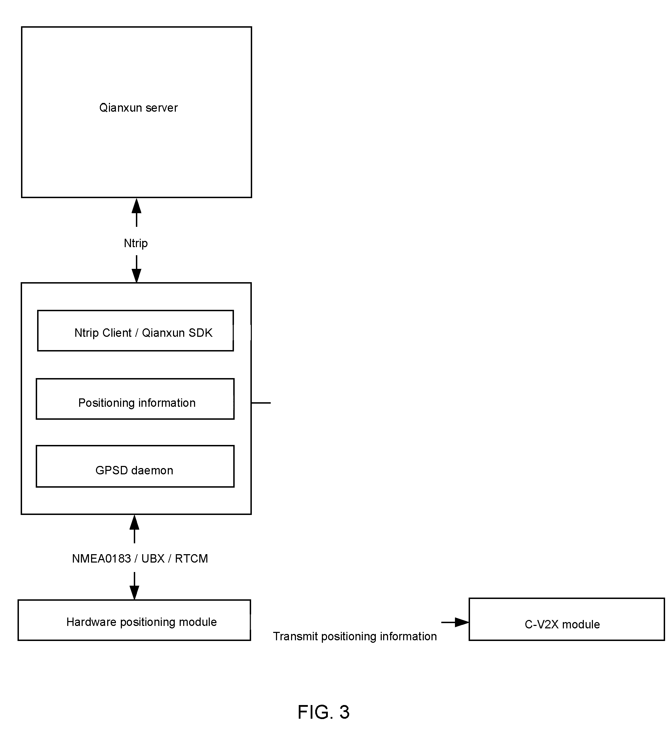

Referring to Fig. 3, the GNSS positioning module 21 is an important module of the system, which providing basic and high-precision differential positioning services for vehicles, involving protocols such as NMEA0183, Ntrip Client and RTCM software protocols. The GNSS positioning module 21 provides basic positioning data, and a system management service starts the GPSD daemon to be responsible for communicating with a hardware positioning module. The positioning information of the hardware positioning module is output in the NMEA0183 standard protocol, and the relevant parameters of the hardware positioning module can be configured through the UBX protocol. The system management service analyses the basic positioning information and then sends the positioning information into the C-V2X module to provide positioning services.

If the hardware positioning module supports high-precision differential positioning, the system obtains a high-precision differential positioning base station information from the Qianxun server through the Ntrip protocol, and then sends the differential positioning base station information in the internal of a high-precision differential positioning module, which calculates and outputs high-precision positioning information through internal algorithms.

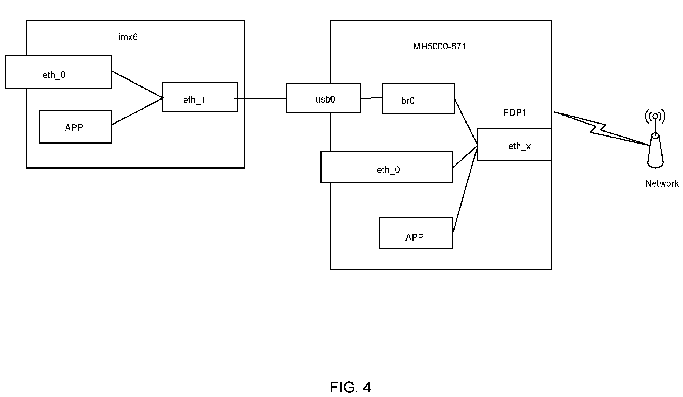

III . The service layer includes system management service 31, network management service 32, V2X hazard detection and other application algorithm 33, internet of vehicles service 34, device firmware upgrade 35 and other services. The services communicate with each other through communication protocols. The system management service 31 is respectively communicated with the GNSS positioning module 21, the C-V2X module 22, and the 5G network module 23, wherein the internet of vehicles service 34 is respectively communicated with the vehicle body data acquisition and control module 24, the security module 25, the system application program 26, the specific protocol module 27, the system log output and storage module 29, and the data storage module 30, wherein the network management service 32 is respectively communicated with the 5G network module 23 and the security module 25.
1. The network topology of the OBU system is shown in Figure 4, the communication module of the 5G communication module initiates a dial-up by default, the communication module preferentially adopts the MH5000-871 module, the data packet is carried by PDP1 by default, and the device name of the network card of the single APN channel mapping WAN port is eth_x. Internal routing configuration allows Gigabit network cards, USB network cards and upper-layer application APP to realize networking functions. The USB interface implements CDC-ECM network equipment. For IMX6, the MH5000-871 module is a USB network card device, eth_1. The 100M LAN port eth_0 device and the internal APP can achieve networking functions through eth_1.

The OBU has two LAN network ports (Gigabit Ethernet port and 100M Ethernet port) and can also be externally connected with an Ethernet-to-WiFi AP, and other WiFi devices can access the internet through the hotspot provided by the AP.

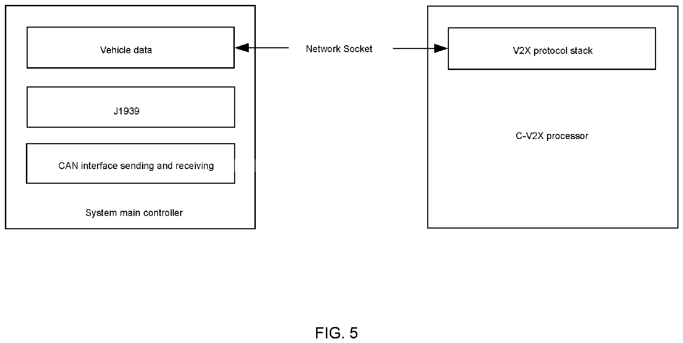

Referring to Fig. 5, a system main controller first creates a CAN channel, establishes communication with the vehicle CAN bus, receives the data on the CAN and performs J1939 protocol parsing, transmits the parsed vehicle data to the CVU through a network socket interface, and finally to the C-V2X module for processing. At the same time, the system main controller receives the commands related to obtaining vehicle data transmitted by the CVU, and sends the commands parsed to the vehicle CAN bus through the CAN interface to realize the control of the vehicle. The C-V2X module includes a C-V2X processor and a V2X protocol stack.

2. The V2X protocol stack includes an access layer interface, a network layer and a message layer protocol implementation. The access layer is provided by the MH5000-871 system, and the module manufacturer provides the corresponding SDK interface to initialize, send and receive data.

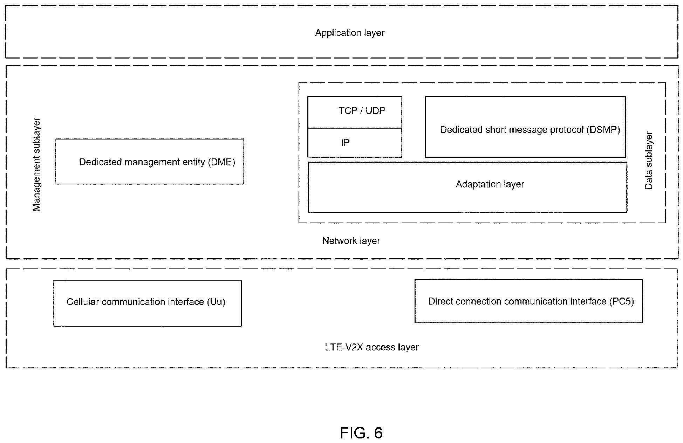

The network layer framework of LTE-based Internet of Vehicles wireless communication technology is shown in Fig. 6. The network layer can support access layer transmission technology based on the Uu interface and the PC5 interface.

The network layer includes a data sublayer and a management sublayer.

The data sublayer mainly includes an adaptation layer, IP and UDP/TCP, and DSMP. The IP protocol and DSMP protocol are both optional. The data sublayer transmits not only the data flow between the application layers, but also the data flow between different device management layer entities or between the management layer entity and the application.

The management sublayer mainly performs system configuration and maintenance functions. The management sublayer transfers management data flows between different devices by using the data sublayer services. The DME is a general collection of management services. The DME provides management interfaces for all data sublayer entities, including the DSMP protocol.

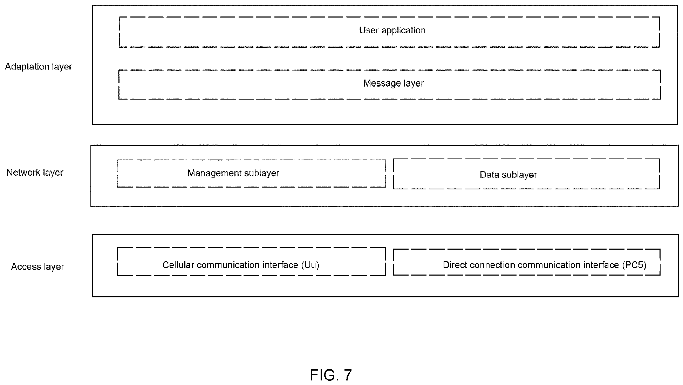

The framework of the message layer of LTE-based Internet of Vehicles wireless communication technology is shown in Fig 7. The message layer is located inside the application layer, connects downward to the data sublayer of the network layer, and supports specific user applications upward. The message layer can support various data transmissions defined by the network layer of LTE-based Internet of Vehicles wireless communication technology.

A dataset of the message layer is defined by the ASN.1 standard, which follows the logic of "message frame-message body-data frame-data element" layer nesting.

The interactive encoding and decoding method of the dataset follows the non-aligned compression encoding rule UPER.

The dataset of the message layer defined by the V2X standard consists of 1 message frame format, 5 most basic message bodies, and corresponding data frames and data elements.

The message frame is a unified packaging format for a single application layer message and is the only operation object for data encoding and decoding. The message frame includes message bodies of diverse categories and supports extensions.

The five most basic message bodies are a vehicle basic safety message, a map message, a road safety information message (RSI), a roadside safety message, and a signal light message.

The vehicle basic safety message is the most widely used application layer message and is used to exchange safety status data between vehicles. Through the broadcast of the message, the vehicle informs surrounding vehicles of the real-time status, thereby supporting a series of collaborative safety and other applications.

The map message is broadcast by the roadside unit and transmits the map information of the local area to the vehicle, including an intersection information, a road segment information, a lane information, and a connection relationship between roads of the local area, etc. A single map message can include a map data for multiple intersections or areas. The signal light message at the intersection is defined in detail in the Signal Phase and Timing (SPAT) message.

The RSI messages are suitable for traffic event information and traffic sign information released by roadside unit to surrounding vehicle-mounted units. Among them, the traffic event information currently supports the national standard GB/T 29100-2012; the traffic sign information currently supports the national standard GB 5768.2-2009. The message frame can package one or more traffic event information or traffic sign information, and also including the roadside unit number and reference location coordinates that sent the message. When judging the effective area of an event or sign, the vehicle-mounted unit makes a determination based on its own positioning and running direction, as well as the time-sensitive information and associated area/road section range provided by the message itself. In the message body, the refPos field is used to provide the reference 3D position coordinates within the scope of the message, and all position offsets in the message are calculated based on the reference coordinate. The true position coordinate is equal to the offset plus the reference coordinate.

Roadside safety message: The roadside unit obtains real-time status information of its surrounding traffic participants through the corresponding detection means owned by the roadside itself (where traffic participants include the roadside unit itself, surrounding vehicles, non-motorized vehicles, pedestrians, etc.), and organizes this information into the format defined by the message body, as the basic safety status information of these traffic participants (similar to Msg_BSM), and broadcasts to surrounding vehicles, and supports the related applications of these vehicles. The existence of the Msg_RSM message makes the vehicle's perception of the surrounding environment not only dependent on the Msg_BSM message. The roadside unit is based on roadside sensors, helping the vehicle detect the surrounding environment, and transmits the real-time information to the vehicle through the Msg_RSM message. In the Msg_RSM message, the refPos field is used to provide the reference three-dimensional position coordinates within the scope of the message. All position offsets in the message are calculated based on the reference coordinate. The true position coordinate is equal to the offset plus the reference coordinate.

The signal light message includes the current status information of one or more intersection signal lights. Combined with the MAP message, it provides real-time signal phase information of the signal lights ahead of the vehicle.

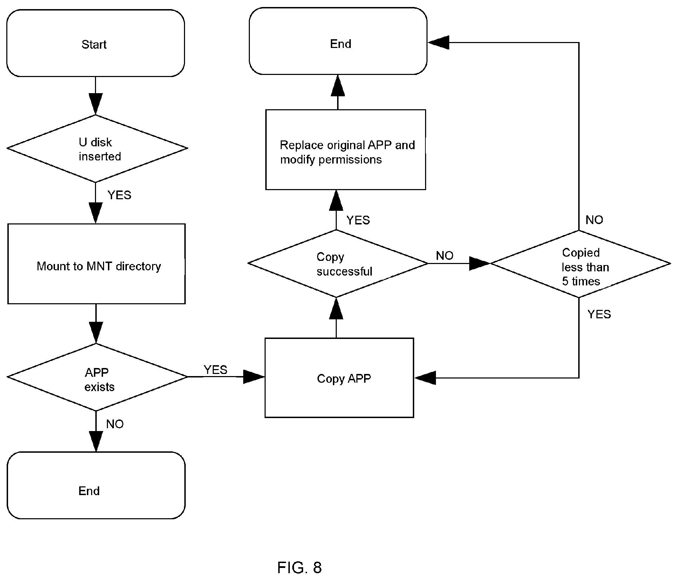

3. U disk upgrade: Refer to Fig. 8, when a U disk is inserted, the system will automatically mount it to the corresponding directory of MNT, and detect whether the specified application firmware is stored in the U disk. If yes, the system will automatically copy the new firmware to a specific directory and compare the MD5 value of the new firmware with the original firmware. If the comparison fails, another copy will be attempted. If replication fails after repeated copies, the upgrade fails. If the replication is successful, replace the old firmware with the new firmware and modify the executable permissions. The changes take effect after device restart.

IV. The application layer 4 includes 17 common specific implementations of vehicle-road collaboration application scenarios and related HMI services.

## Claims

1. A software design method for an intelligent vehicle-mounted terminal based on microservice architecture, which is **characterized by** dividing a system software into a hardware adaptation layer, a system component, a service layer, and an application layer, wherein
the hardware adaptation layer comprises an embedded operating system related interface and a hardware external setting interface driver, wherein
the system component comprises a GNSS positioning module, a C-V2X module, a 5G network module, a vehicle body data acquisition and control module, a security module, a system application program, a specific protocol module, and a data storage module, wherein the modules communicate with each other through a lightweight message component between the modules, wherein
the service layer comprises a system management service, a network management service, a V2X hazard detection algorithm service, an internet of vehicles service, and a firmware upgrade service, wherein the services communicate with each other through communication protocols between the services, wherein
the application layer comprises several specific implementations of vehicle-road collaboration application scenarios and related HMI services, wherein the method further comprises:
communicating and connecting the system management service and the GNSS positioning module, the C-V2X module, and the 5G network module respectively; communicating and connecting the internet of vehicles service and the vehicle body data acquisition and control module, the security module, the system application program, the specific protocol module and the data storage module respectively; communicating and connecting the network management service and the 5G network module and the security module respectively; enabling the system software to realize the Internet of Vehicles through the network management service through the 5G network module; and establishing communication between a system main controller and a vehicle CAN bus, transmitting a parsed vehicle data to the vehicle body data acquisition and control module through a network socket interface, and finally processing through the C-V2X module.

2. The software design method for intelligent vehicle-mounted terminal based on microservice architecture, as recited in claim 1, **characterized in that**: communicating the C-V2X module and the system main controller through a V2X protocol stack, wherein the V2X protocol stack comprises an access layer, a network layer and a message layer protocol, wherein the access layer comprises an Uu interface and a PC5 interface, wherein the network layer comprises a data sublayer and a management sublayer, wherein the data sublayer not only transmits data flows between application layers, but also transmits data flows between management entities of different devices or between management entities and applications, wherein the management sublayer transmits management data flows between different devices by using the data sublayer service, wherein the message layer is located inside the application layer, connects downward to the data sublayer of the network layer, and supports specific user applications upward.

3. The software design method for intelligent vehicle-mounted terminal based on microservice architecture, as recited in claim 1, **characterized in that**: implementing system-related function interfaces for unified calling by an upper-layer application through the embedded operating system related interface, wherein the upper-layer application configures different relevant parameters when calling, wherein the embedded operating system related interface comprises memory operation functions, system tasks, semaphores, thread synchronization mutexes, system message queues, events and timers.

4. The software design method for intelligent vehicle-mounted terminal based on microservice architecture, as recited in claim 1, **characterized in that**: realizing the initialization of various external settings through the hardware external setting interface, and providing an open, send or write data, receive or read data, deinitialize or close the function interface, wherein the hardware external setting interface comprises a serial port communication, a serial external setting SPI communication, a I2C bus, and a network socket interface.

5. The software design method for intelligent vehicle-mounted terminal based on microservice architecture, as recited in claim 1, **characterized in that**: providing a basic and high-precision differential positioning service for the vehicle through the GNSS positioning module, wherein the protocols involved include NMEA0183, Ntrip Client and RTCM protocol, wherein providing a basic positioning data through the GNSS positioning module, starting the GPSD daemon through the system management service to be responsible for communicating with the hardware positioning module, outputting the hardware positioning module positioning information using the NMEA0183 standard protocol, opening the system management service to configure the relevant parameters of the hardware positioning module through the UBX protocol, parsing out the basic positioning information, and then sending the positioning information into the C-V2X module to provide positioning service.

6. The software design method for intelligent vehicle-mounted terminal based on microservice architecture, as recited in claim 5, **characterized in that**: if the hardware positioning module supports a high-precision differential positioning, the system management service obtains a high-precision differential positioning base station information from a server through the Ntrip protocol, and then sends the high-precision differential positioning base station information in the internal of a high-precision differential positioning module, which calculates and outputs a high-precision positioning information through internal algorithms.

7. The software design method for intelligent vehicle-mounted terminal based on microservice architecture, as recited in claim 6, **characterized in that**: defining a dataset of the message layer using the ASN.1 standard, and formulating following the nested logic of "message frame - message body - data frame - data element", wherein the interactive encoding and decoding method of the dataset follows the non-aligned compression encoding rule UPER.

8. The software design method for intelligent vehicle-mounted terminal based on microservice architecture, as recited in claim 1, **characterized in that**: the dataset of the message layer defined by the C-V2X module standard mainly consists of one message frame format, five most basic message bodies, and corresponding data frames and data elements.

9. The software design method for intelligent vehicle-mounted terminal based on microservice architecture, as recited in claim 8, **characterized in that**: the five most basic message bodies are a vehicle basic safety message, a map message, a road safety information message (RSI), a roadside safety message, and a signal light message.

10. The software design method for intelligent vehicle-mounted terminal based on microservice architecture, as recited in claim 1, **characterized in that**: inserting into a U disk, automatically mounting the U disk to a corresponding directory of MNT by the system, and detecting whether the specified application firmware is stored in the U disk; if yes, automatically copying to a specific directory by the system and comparing the MD5 value of the new firmware with the original firmware; if the comparison fails, copying will be attempted again; if the replication fails after repeated copies, failing the upgrade; if the replication is successful, replacing the old firmware with the new firmware and modifying the executable permissions, and taking effect after device restart.

## Patentansprüche

1. Softwareauslegungsverfahren für ein intelligentes, in einem Fahrzeug installiertes Endgerät auf Grundlage von Mikrodienstarchitektur, **gekennzeichnet durch** Teilen einer Systemsoftware in eine Hardwareanpassungsschicht, eine Systemkomponente, eine Dienstschicht und eine Anwendungsschicht, wobei
die Hardwareanpassungsschicht eine eingebettete betriebssystembezogene Schnittstelle und einen Schnittstellentreiber für Einstellungen externer Hardware umfasst, wobei
die Systemkomponente ein GNSS-Ortungsmodul, ein C-V2X-Modul, ein 5G-Netzwerkmodul, ein Fahrzeugkarosseriedatenerfassungs- und -steuerungsmodul, ein Sicherheitsmodul, ein Systemanwendungsprogramm, ein spezifisches Protokollmodul und ein Datenspeichermodul umfasst, wobei die Module durch eine Nachrichtenkomponente von geringem Gewicht miteinander kommunizieren, wobei
die Dienstschicht einen Systemmanagementdienst, einen Netzwerkmanagementdienst, einen V2X-Gefahrenerkennungsalgorithmusdienst, einen Internet-of-Vehicles-Dienst und einen Firmware-Upgrade-Dienst umfasst, wobei die Dienste durch Kommunikationsprotokolle zwischen den Diensten miteinander kommunizieren, wobei
die Anwendungsschicht mehrere spezifische Implementierungen von Fahrzeug-Straße-Kollaborationsanwendungsszenarien und zugehörige HMI-Dienste umfasst, wobei das Verfahren ferner umfasst:
Kommunizierenlassen und Verbinden des Systemmanagementdienstes und des GNSS-Ortungsmoduls, des C-V2X-Moduls und des 5G-Netzes; Kommunizierenlassen und Verbinden des Internet-of-Vehicles-Dienstes und des Fahrzeugkarosseriedatenerfassungs- und -steuerungsmoduls, des Sicherheitsmoduls, des Systemanwendungsprogramms, des spezifischen Protokollmoduls und des Datenspeichermoduls; Kommunizierenlassen und Verbinden des Netzwerkmanagementdienstes und des 5G-Netzmoduls und des Sicherheitsmoduls; Ermöglichen, dass die Systemsoftware das Internet of Vehicles durch den Netzwerkmanagementdienst durch das 5G-Netzwerkmodul einrichtet; und Herstellen von Kommunikation zwischen einem Systemhaupt-Controller und einem Fahrzeug-CAN-Bus, Übertragen geparster Fahrzeugdaten an das Fahrzeugkarosseriedatenerfassungs- und -steuerungsmodul durch eine Netzwerk-Socket-Schnittstelle und zuletzt Verarbeiten durch das C-V2X-Modul.

2. Softwareauslegungsverfahren für ein intelligentes, in einem Fahrzeug installiertes Endgerät auf Grundlage von Mikrodienstarchitektur nach Anspruch 1, **gekennzeichnet durch**: Kommunizierenlassen des C-V2X-Moduls und des Systemhaupt-Controllers durch einen V2X-Protokollstapel, wobei der V2X-Protokollstapel eine Zugriffsschicht, eine Netzwerkschicht und ein Nachrichtenschichtprotokoll umfasst, wobei die Zugriffsschicht eine Uu-Schnittstelle und eine PC5-Schnittstelle umfasst, wobei die Netzwerkschicht eine Datenteilschicht und eine Managementteilschicht umfasst, wobei die Datenteilschicht nicht nur Datenströme zwischen Anwendungsschichten überträgt, sondern auch Datenströme zwischen Managementeinheiten unterschiedlicher Vorrichtungen oder zwischen Managementeinheiten und Anwendungen überträgt, wobei die Managementteilschicht unter Verwendung des Datenteilschichtdienstes Managementdatenströme zwischen unterschiedlichen Vorrichtungen überträgt, wobei die Nachrichtenschicht innerhalb der Anwendungsschicht liegt, abwärts mit der Datenteilschicht der Netzwerkschicht verbunden ist und eine Aufwärtsunterstützung für bestimmte Benutzeranwendungen bereitstellt.

3. Softwareauslegungsverfahren für ein intelligentes, in einem Fahrzeug installiertes Endgerät auf Grundlage von Mikrodienstarchitektur nach Anspruch 1, **gekennzeichnet durch**: Implementieren von systembezogenen Funktionsschnittstellen für einheitliche Rufe durch eine Anwendung der oberen Schicht durch die eingebettete betriebssystembezogene Schnittstelle, wobei die Anwendung der oberen Schicht bei den Rufen unterschiedliche relevante Parameter konfiguriert, wobei die die eingebettete betriebssystembezogene Schnittstelle Speicheroperationsfunktionen, System-Tasks, Semaphoren, Strangsynchronisationmutexes, Systemnachrichtenwarteschlangen, Ereignisse und Timer umfasst.

4. Softwareauslegungsverfahren für ein intelligentes, in einem Fahrzeug installiertes Endgerät auf Grundlage von Mikrodienstarchitektur nach Anspruch 1, **gekennzeichnet durch**: Ausführen der Initialisierung verschiedener externer Einstellungen durch die Schnittstelle für Einstellungen externer Hardware und Bereitstellen von offenen Sende- oder Schreibdaten, Empfangs- oder Lesedaten, Deinitialisieren oder Schließen der Funktionsschnittstelle, wobei die Schnittstelle für Einstellungen externer Hardware serielle Port-Kommunikation, serielle SPI-Kommunikation für externe Einstellungen, einen I2C-Bus und eine Netzwerk-Socket-Schnittstelle umfasst.

5. Softwareauslegungsverfahren für ein intelligentes, in einem Fahrzeug installiertes Endgerät auf Grundlage von Mikrodienstarchitektur nach Anspruch 1, **gekennzeichnet durch**: Bereitstellen eines grundlegenden und hochpräzisen differenziellen Ortungsdienstes für das Fahrzeug durch das GNSS-Ortungsmodul, wobei beteiligten die Protokolle NMEA0183, Ntrip Client und RTCM-Protokoll einschließen, wobei Bereitstellen grundlegender Ortungsdaten durch das GNSS-Ortungsmodul, Starten des GPSD-Daemon durch den Systemmanagementdienst, der für die Kommunikation mit dem Hardwareortungsmodul zuständig sein soll, Ausgeben der Hardwareortungsmodulortungsinformationen unter Verwendung des NMEA0183-Standard-Protokolls, Öffnen des Systemmanagementdienstes, um die relevanten Parameter des Hardwareortungsmoduls durch das UBX-Protokoll zu konfigurieren, Herausparsen der grundlegenden Ortungsinformationen und dann Senden der Ortungsinformationen an das C-V2X-Modul, um einen Ortungsdienst bereitzustellen.

6. Softwareauslegungsverfahren für ein intelligentes, in einem Fahrzeug installiertes Endgerät auf Grundlage von Mikrodienstarchitektur nach Anspruch 5, **dadurch gekennzeichnet, dass**: wenn das Hardwareortungsmodul hochpräzise differenzielle Ortung unterstützt, erlangt der Systemmanagementdienst Basisstationsinformationen für die hochpräzise differenzielle Ortung von einem Server durch das Ntrip-Protokoll und sendet die Basisstationsinformationen für die hochpräzise differenzielle Ortung in einem Modul für hochpräzise differenzielle Ortung, das durch interne Algorithmen hochpräzise differenzielle Ortungsinformationen berechnet und ausgibt.

7. Softwareauslegungsverfahren für ein intelligentes, in einem Fahrzeug installiertes Endgerät auf Grundlage von Mikrodienstarchitektur nach Anspruch 6, **gekennzeichnet durch**: Definieren eines Datensatzes der Nachrichtenschicht unter Verwendung des ASN.1-Standards und Formulieren anhand von Verschachtelungslogik von "Nachrichten-Frame - Nachrichtentextkörper - Daten-Frame - Datenelement", wobei das interaktive Codierungs- und Decodierungsverfahren des Datensatzes der freien Kompressionscodierungsregel UPER folgt.

8. Softwareauslegungsverfahren für ein intelligentes, in einem Fahrzeug installiertes Endgerät auf Grundlage von Mikrodienstarchitektur nach Anspruch 1, **dadurch gekennzeichnet, dass** der Datensatz der Nachrichtenschicht, der durch den C-V2X-Modulstandard definiert wird, hauptsächlich aus einem Nachrichten-Frame-Format, fünf grundlegendsten Nachrichtentextkörpern und entsprechenden Daten-Frames und Datenelementen besteht.

9. Softwareauslegungsverfahren für ein intelligentes, in einem Fahrzeug installiertes Endgerät auf Grundlage von Mikrodienstarchitektur nach Anspruch 8, **dadurch gekennzeichnet, dass**: die fünf grundlegendsten Nachrichtentextkörper eine grundlegende Fahrzeugsicherheitsnachricht, eine Kartennachricht, eine Straßensicherheitsinformationsnachricht (RSI), eine Straßenrandsicherheitsnachricht und eine Ampelnachricht sind.

10. Softwareauslegungsverfahren für ein intelligentes, in einem Fahrzeug installiertes Endgerät auf Grundlage von Mikrodienstarchitektur nach Anspruch 1, **gekennzeichnet durch**: Einsetzen einer U-Platte, automatisches Installieren der U-Platte in einem entsprechenden Verzeichnis von MNT durch das System und Erkennen, ob die festgelegte Anwendungsfirmware auf der U-Platte gespeichert ist; wenn ja, automatisches Kopieren in ein bestimmtes Verzeichnis durch das System und Vergleichen des MD5-Werts der neuen Firmware mit der ursprünglichen Firmware; wenn der Vergleich fehlschlägt, erneutes Versuchen zu kopieren; wenn die Replikation nach wiederholtem Kopieren fehlschlägt, Behandeln des Upgrades als fehlgeschlagen; wenn die Replikation erfolgreich ist, Ersetzen der alten Firmware mit der neuen Firmware und Modifizieren der ausführbaren Berechtigungen und Übernehmen nach dem Neustart der Vorrichtung.

## Revendications

1. Procédé de conception logicielle pour un terminal intelligent monté sur véhicule basé sur une architecture microservice, **caractérisé par** la division d'un logiciel système en une couche d'adaptation matérielle, un composant système, une couche de service et une couche applicative, dans lequel :
la couche d'adaptation matérielle comprend une interface intégrée liée au système d'exploitation et un pilote d'interface externe matériel, dans lequel
le composant système comprend un module de positionnement GNSS, un module C-V2X, un module réseau 5G, un module d'acquisition et de contrôle des données de la carrosserie du véhicule, un module de sécurité, un programme d'application système, un module protocolaire spécifique et un module de stockage de données, dans lequel les modules communiquent entre eux via un composant de messages léger entre les modules, dans lequel
la couche de service comprend un service de gestion système, un service de gestion réseau, un service d'algorithme de détection des dangers V2X, un service Internet des véhicules et un service de mise à niveau du firmware, dans lequel les services communiquent entre eux via des protocoles de communication entre les services, dans lequel
la couche applicative comprend plusieurs implémentations spécifiques de scénarios d'application de collaboration véhicule-route et de services HMI associés, le procédé comprenant en outre :
la communication et la connexion, respectivement, du service de gestion du système et du module de positionnement GNSS, du module C-V2X et du module réseau 5G ; la communication et la connexion du service Internet des véhicules ainsi que du module d'acquisition et de contrôle des données de carrosserie du véhicule, du module de sécurité, du programme d'application système, du module protocole spécifique et du module de stockage des données, respectivement ; la communication et la connexion, respectivement, du service de gestion réseau ainsi que du module réseau 5G et du module de sécurité ; la possibilité pour le logiciel système de réaliser l'Internet des véhicules via le service de gestion réseau via le module réseau 5G ; et l'établissement de la communication entre un contrôleur principal du système et un bus CAN du véhicule, la transmission des données analysées du véhicule au module d'acquisition et de contrôle des données du véhicule via une interface de socket réseau, et enfin le traitement via le module C-V2X.

2. Procédé de conception logicielle pour un terminal intelligent monté sur véhicule basé sur l'architecture microservice, selon la revendication 1, **caractérisé par** la communication entre le module C-V2X et le contrôleur principal du système via une pile de protocoles V2X, dans lequel la pile de protocoles V2X comprend une couche d'accès, une couche réseau et un protocole de couche message, dans lequel la couche d'accès comprend une interface Uu et une interface PC5, dans lequel la couche réseau comprend une sous-couche de données et une sous-couche de gestion, dans lequel la sous-couche de données transmet non seulement des flux de données entre les couches applicatives, mais transmet aussi des flux de données entre entités de gestion de différents dispositifs ou entre entités de gestion et applications, dans lequel la sous-couche de gestion transmet des flux de données entre différents appareils en utilisant le service de sous-couche de données, dans lequel la couche message se trouve à l'intérieur de la couche applicative, se connecte vers le bas à la sous-couche de données de la couche réseau, et prend en charge des applications utilisateur spécifiques vers le haut.

3. Procédé de conception logicielle pour un terminal intelligent monté sur véhicule basé sur l'architecture microservice, selon la revendication 1, **caractérisé par** l'implémentation des interfaces de fonctions liées au système pour l'appel unifié par une application de couche supérieure via l'interface liée au système d'exploitation embarqué, dans lequel l'application de la couche supérieure configure différents paramètres pertinents lors de l'appel, dans lequel l'interface liée au système d'exploitation embarqué comprend des fonctions liées au fonctionnement de la mémoire, des tâches système, des sémaphores, des mutex de synchronisation de threads, des files d'attente de messages système, des événements et minuteries.

4. Procédé de conception logicielle pour un terminal intelligent monté sur véhicule basé sur l'architecture microservice, selon la revendication 1, **caractérisé par** la réalisation de l'initialisation de divers paramètres externes via l'interface de réglage externe matériel, et la fourniture d'une interface d'ouverture, d'envoi ou d'écriture de données, de réception ou de lecture des données, de désinitialisation ou de fermeture de fonction, dans lequel l'interface de réglage externe matérielle comprend une communication par port série, une communication SPI externe à réglage série, un bus I2C et une interface socket réseau.

5. Procédé de conception logicielle pour un terminal intelligent monté sur véhicule basé sur une architecture microservice, selon la revendication 1, **caractérisé par** la fourniture d'un service de positionnement différentiel basique et de haute précision pour le véhicule via le module de positionnement GNSS, dans lequel les protocoles impliqués incluent NMEA0183, Ntrip Client et le protocole RTCM, la fourniture de données de positionnement de base via le module de positionnement GNSS, le démarrage du démon GPSD via le service de gestion système pour être responsable de la communication avec le module de positionnement matériel, l'envoi des informations de positionnement du module de positionnement matériel en utilisant le protocole standard NMEA0183, l'ouverture du service de gestion système pour configurer les paramètres pertinents du module de positionnement matériel via le protocole UBX, l'analyse des informations de positionnement de base, et l'envoi des informations de positionnement dans le module C-V2X pour fournir le service de positionnement.

6. Procédé de conception logicielle pour un terminal intelligent monté sur véhicule basé sur l'architecture microservice selon la revendication 5, **caractérisé en ce que** si le module de positionnement matériel supporte un positionnement différentiel de haute précision, le service de gestion du système obtient une information de station de base de positionnement différentiel de haute précision depuis un serveur via le protocole Ntrip, puis envoie les informations de la station de base de positionnement différentiel à haute précision à l'intérieur d'un module de positionnement différentiel de haute précision, qui calcule et fournit une information de positionnement de haute précision via des algorithmes internes.

7. Procédé de conception logicielle pour un terminal intelligent monté sur véhicule basé sur l'architecture microservice selon la revendication 6, **caractérisé par** la définition d'un ensemble de données de la couche message en utilisant la norme ASN.1, et la formulation selon la logique imbriquée « image message - corps du message - trame de données - élément de données », dans lequel le procédé interactif d'encodage et de décodage du jeu de données suit la règle d'encodage par compression non alignée UPER.

8. Procédé de conception logicielle pour un terminal intelligent monté sur véhicule basé sur l'architecture microservice selon la revendication 1, **caractérisé en ce que** le jeu de données de la couche de messages défini par la norme de module C-V2X se compose principalement d'un format de trame de message, de cinq corps de messages les plus basiques, ainsi que de trames de données et d'éléments de données correspondants.

9. Procédé de conception logicielle pour un terminal intelligent monté sur véhicule basé sur l'architecture microservice selon la revendication 8, **caractérisé en ce que** les cinq corps de messages les plus basiques sont un message de sécurité de base du véhicule, un message de carte, un message d'information sur la sécurité routière (RSI), un message de sécurité routière et un message de feux de signalisation.

10. Procédé de conception logicielle pour un terminal intelligent monté sur véhicule basé sur l'architecture microservice selon la revendication 1 **caractérisé par** l'insertion dans un disque U, le montage automatique du disque U dans un répertoire correspondant de MNT par le système, et la détection du fait que le firmware applicatif spécifié est stocké dans le disque U ; si oui, la copie automatique dans un répertoire spécifique par le système et la comparaison de la valeur MD5 du nouveau firmware avec le firmware d'origine ; si la comparaison échoue, la copie sera de nouveau tentée ; si la réplication échoue après des copies répétées, la mise à niveau échoue ; si la réplication réussit, remplacement de l'ancien firmware par le nouveau et modification des autorisations exécutables, avec prise d'effet après le redémarrage du périphérique.
